# EUROPEAN PATENT APPLICATION

(11) **EP 4 663 400 A1**
(43) Date of publication of application: **17.12.2025**
(21) Application number: 24382630.2
(22) Date of filing: 11.06.2024
(51) Int. Cl.: B32B 3/04, B32B 7/12, B32B 15/09, B32B 15/18, B32B 15/20, B32B 27/08, B32B 27/36

(54) **RECYCLABLE METAL-LAYER CONTAINING MULTILAYERED CARD STRUCTURE**

(71) Applicant: Giesecke+Devrient ePayments GmbH, 81677 München (DE)
(72) Inventor: Gali, Josep, 08820 El Prat de Llobregat (Barcelona) (ES)
(74) Representative: LKGLOBAL Lorenz & Kopf Patentanwalt Attorney at Law PartG mbB

(57) **Abstract**

The present invention relates to a multilayered card structure comprising at least one aluminum-containing layer covered by a first polymer-based layer which is a poly(ethylene terephthalate) (PET) layer, wherein all further polymer-based layers of the multilayered card structure except of potentially present adhesive layers comprise glycol-modified PET (PET-G) or PET. The multilayered card structure may be a security document, preferably a banking card.

## Description

### TECHNICAL FIELD

The present invention relates to a multilayered card structure comprising at least one aluminum-containing layer covered by a first polymer-based layer which is a poly(ethylene terephthalate) (PET) layer, wherein all further polymer-based layers of the multilayered card structure except of potentially present adhesive layers comprise glycol-modified PET (PET-G) or PET.

### TECHNICAL BACKGROUND

Security documents in the form of cards, such as banking cards, personal identity cards, driving license cards, membership cards, etc. are widely used, for instance for cash-free payments or personal identification. While identification cards, such as personal identity cards, driving licenses, and membership cards are usually less frequently used, in particular banking cards are subject to continuous mechanical stress as they are often inserted into card reading equipment, such as automated teller machines (ATMs), payment card readers, etc. Due to this intense mechanical stress, in particular banking cards are prone to continuous wear and tear which leads to the need of frequent replacement of used banking cards by new banking cards. Apart from that have security documents in the form of cards for security reasons usually expiry dates which are often for personal identity cards around ten years from issuance and for banking cards around three to five years from issuance. This leads to a huge amount of old security documents in the form of cards each year which are generated as waste.

Security documents in the form of cards are usually multilayered structures comprising various layers of polymers which are predominately poly(vinyl chloride) (PVC) which has been found to be the most robust material for the purposes of the security cards, and further usually also contain metal parts, such as security stripes, holograms, chips, etc. Due to the excessive use of PVC recycling of the materials from these multilayered security cards, in particular the polymeric components thereof, is tedious if not impossible at all as recycling of PVC in general has been found to be challenging due to its chemical resistance and the potential liberation of hydrochloric acid during any treatment process of PVC for the purpose of potential recycling. Hence, presently these waste security cards are usually disposed in landfills or are in some instances even burned. Both of these types of disposal are less favorable from an environmental point of view. Disposing PVC in landfills bears the risk that during decomposition of the PVC chlorinated compounds or polymer fragments are spilled in the environment. Burning should be avoided due to the formation of gaseous hydrochloric acid when burning PVC.

The problem of how to discard waste security cards has become even more pronounced with the development of new types of metal-containing layers, such as in particular aluminum-containing layers, for security cards which provide for a certain optical effect which on the one hand gives the security card an esthetically attractive appearance and on the other hand also complicates counterfeiting of the security card. An example of such new types of metal-containing layers are layers of the HoloLam- series provided by ITW Specialty Films, such as HoloLamPlus^{®}. For the optical effect achieved by these metal-containing layers, such as in particular aluminum-containing layers, it is crucial that the metal-containing layer is covered by a polymer layer made of poly(ethylene terephthalate) (PET). This leads to security documents in the form of cards which not only have metallic parts in it, but which also have various layers made from even different types of polymers, i.e. at least PVC and PET. This further complicates any potential recycling of such security cards as in any recycling process the layers made from different polymers need to be separated first in order to be able to recycle each type of polymer individually. It has been found that the separation of a metal-containing layer, such as in particular an aluminum-containing layer, which is covered by a PET layer is very difficult to separate from any PVC layers, as these layers are all properly joined together, usually by thermal bonding and/or use of adhesives. Moreover, the layers of security cards are very thin, usually in the micro-meter range, which further complicates proper separation of any layers of such security cards.

In view of the foregoing, there is a need for improved security documents in the form of cards comprising at least one aluminum-containing layer covered by a poly(ethylene terephthalate) (PET) layer which have improved recyclability compared to known security cards. Moreover, it would be desirable if such security documents in the form of cards having improved recyclability at the same time also have a wear and tear resistance as well as chemical resistance which is at least similar and preferably even superior compared to known security cards.

### SUMMARY OF THE INVENTION

The present invention provides a multilayered card structure comprising at least one aluminum-containing layer covered by a first polymer-based layer which is a poly(ethylene terephthalate) (PET) layer, wherein all further polymer-based layers of the multilayered card structure except of potentially present adhesive layers comprise glycol-modified PET (PET-G) or PET.

Further features of the present invention can be derived from the claims, the figures and the description of the figures.

Specific embodiments of the present invention are described herein also by means of figures.

### BRIEF DESCRIPTION OF DRAWINGS

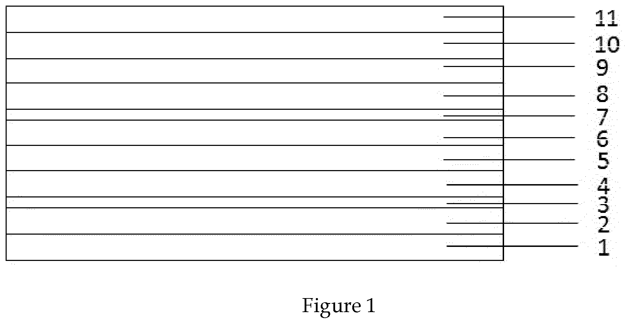

Fig. 1: Figure 1 schematically shows an exemplified multilayered card structure according to the present invention.

### DESCRIPTION

The present invention provides a multilayered card structure comprising at least one aluminum-containing layer covered by a first polymer-based layer which is a poly(ethylene terephthalate) (PET) layer, wherein all further polymer-based layers of the multilayered card structure except of potentially present adhesive layers comprise glycol-modified PET (PET-G) or PET.

It has been found that such multilayered card structure surprisingly provides for improved recyclability of the multilayered cards compared to known security cards, in particular compared to multilayered cards comprising PVC-containing layers. Moreover, it was found that such multilayered cards as described herein have a wear and tear resistance as well as chemical resistance which is at least similar compared to known multilayered cards, in particular compared to multilayered cards comprising PVC-containing layers.

Such specific multilayered structure of the multilayered card structure as described herein has several beneficial effects. Firstly, during a recycling process of such multilayered cards no separation of layers of different polymers is necessary, as all layer comprise a polymer at least based on PET. This significantly simplifies any recycling process for these multilayered cards. Secondly, recycling polymers being at least partly based on PET is significantly easier than recycling of PVC. In fact, recycling of PET is a well-known and widely performed process and, hence, facilities for efficient recycling of PET already exist.

The multilayered card structure of the present invention comprises at least one aluminum-containing layer covered by a first polymer-based layer which is a PET layer. The aluminum-containing layer may consist of aluminum, An example of such new types of aluminum -containing layers are layers of the HoloLam-series provided by ITW Specialty Films, such as HoloLamPlus^{®}. Such layer provides the multilayered card structure with an esthetically attractive appearance and on the other hand also complicates counterfeiting of multilayered card structure. The aluminum-containing layer is usually a layer extending over the whole area of the card, and the first polymer-based layer which is a PET layer is usually present over the whole area of the aluminum-containing layer. This means that the first polymer-based layer which is a PET layer is directly attached to the aluminum-containing layer. In some embodiments, the aluminum-containing layer may have interruptions for specific inserts in the multilayered card structure, such as chips and/or magnetic stripes. In some embodiments, the aluminum-containing layer is present over the whole area of the card and merely an interruption for a chip.

The improved recyclability of multilayered card structure is due to that all polymer-based layers of the inventive multilayered card structure as described herein comprise a polymer being at least partly based on PET. The polymer may be pure PET (i.e. 100% PET) or, alternatively, may at least partly comprise PET.

If the polymer is pure PET, the polymer consists of 100% PET. PET is usually made from ethylene glycol monomers and terephthalic acid monomers which are condensed so to form ester bonds. Hence, in some embodiments of the present invention, if the polymer is pure PET, all monomers from which the PET is made are either ethylene glycol monomers or terephthalic acid monomers.

If the polymer at least partly comprises PET, the polymer may for instance comprise at least 50 wt. %, at least 55 wt.%, at least 60 wt.%, at least 65 wt.%, at least 70 wt.%, at least 75 wt.%, at least 80 wt.%, at least 85 wt.%, at least 90 wt.%, or at least 95 wt.% PET, the wt.% being based on the total weight of the polymer comprising at least partly PET-units. Hence, in some embodiments of the present invention, if the polymer at least partly comprises PET, the polymer comprises substructure units made from one ethylene glycol monomer and one terephthalic acid monomer which are condensed so to form ester bonds.

If the polymer at least partly comprises PET, the polymer comprises further monomeric units which are not ethylene glycol monomers and terephthalic acid monomers. These monomers may be further glycols, i.e. glycols which are not ethylene glycol. Such polymers are referred herein to as glycol-modified poly(ethylene terephthalate), or as glycol-modified PET, or as PET-G. As used herein in the context of the further glycols for the glycol modification, the term "glycol" encompasses any polyol, i.e. any compound comprising at least two hydroxy groups, such as diols, triols, or tetrols. Preferably, the further glycol for the glycol modification is a diol. In principle, any polyol may be used for the glycol modification, such as alkanepolyols, such as preferably alkandiols, such as propandiols, such as 1,2-propandiol, or 1,3-propandiol, butandiols, such as 1,2-butandiol, 1,3-butandiol, or 1,4-butandiol, pentanediols, such as 1,2-pentanediol, 1,3-pentanediol, 1,4-pentanediol, or 1,5-pentanediol, hexandiols, such as 1,2-hexandiol, 1,3-hexandiol, 1,4-hexandiol, 1,5-hexandiol, or 1,6-hexandiol, cyclic polyols, such as preferably cyclic diols, such as cyclohexanediols, such as 1,2-cyclohexanediol, 1,3-cyclohexanediol, or 1,4-cyclohexanediol, and cyclohexanedialkanols, such as 1,2-cyclohexanedimethanol, 1,3-cyclohexanedimethanol, 1,4-cyclohexanedimethanol, 1,2-cyclohexanediethanol, 1,3-cyclohexanediethanol, and 1,4-cyclohexanediethanol, or any mixture of these polyols. One particular preferred polyol for glycol-modified PET for use in the multilayered card structure of the present invention is 1,4-cyclohexanedimethanol.

In the multilayered card structure of the present invention all further polymer-based layers except of potentially present adhesive layers comprise PET-G or PET. This of course also includes multilayered card structures, wherein some layers comprise PET-G and other layers comprise PET. It has been found that recyclability of such multilayered card structure containing PET-comprising layers and PET-G-comprising layers is not significantly impaired compared to multilayered structures comprising only layer of one polymer type. Hence, if necessary, the potential use of layers based on different polymers provides more flexibility for the card manufacturer as regards card design.

In some embodiments of the present invention, the multilayered card structure comprises at least one layer comprising PET-G. Preferably, all further polymer-based layers of the multilayered card structure of the present invention comprise PET-G. It has been found that recyclability of PET-G is even better than recyclability of PET.

In some embodiments of the present invention, all polymer-based layers of the multilayered card structure consist of PET-G or PET. This of course also includes multilayered card structures, wherein some layers consist of PET-G and other layers consist of PET. In some preferred embodiments of the present invention, all further polymer-based layers of the multilayered card structure consist of PET-G.

In some embodiments of the present invention, at least one layer of the multilayered card structure comprises recycled PET-G or recycled PET. In some preferred embodiments of the present invention, at least one layer of the multilayered card structure comprises recycled PET-G. In some further preferred embodiments of the present invention, all layers of the multilayered card structure comprise recycled PET-G or recycled PET. In some even further preferred embodiments of the present invention, all layers of the multilayered card structure comprise recycled PET-G. The use of recycled PET-G or recycled PET is beneficial in order to improve the overall sustainability and the eco-footprint of the multilayered card structure.

In some embodiments, at least one layer of the multilayered card structure consists of recycled PET-G or recycled PET. In some preferred embodiments of the present invention, at least one layer of the multilayered card structure consists of recycled PET-G. In some further preferred embodiments of the present invention, all layers of the multilayered card structure const of recycled PET-G or recycled PET. In some even further preferred embodiments of the present invention, all layers of the multilayered card structure consist of recycled PET-G.

The multilayered card structure of the present invention may comprise one or more adhesive layers. Adhesive layers are used to improve adherence between different layers of the multilayered structure, in particular between metal-based layers and polymer-based layers, but also between potential clear layers and potential core layers of the multilayered card structure. Suitable adhesives are known by the skilled person and are usually polymer based. The polymers of the adhesive layers, if present, do not necessarily comprise PET-G or PET. In other words, with the term "except of potentially present adhesive layers" as used herein and in the claims, it is meant that any such potentially present adhesive layer(s) do not necessarily comprise PET-G or PET. In even other words, the term "except of potentially present adhesive layers" can be construed as "with the proviso that potentially present adhesive layers do not need to comprise PET-G or PET". However, in some embodiments of the present invention, the multilayered card structure does not comprise any adhesive layers. In other embodiments, at least one adhesive layer is present and, preferably, all of the at least one adhesive layer(s) also comprise PET-G or PET. Adhesive layers are normally very thin and usually have a thickness of less than 10 µm, such as less than 8 µm, less than 7 µm, less than 5 µm, or even less than 3 µm.

The multilayered card structure of the present invention may comprise further layers including all layers which are commonly present in multilayered card structures for security elements, such as preferably banking cards. Such commonly present layers may be overlay clear layers, clear layers, core layers (also called core-stock layers), antenna layers, etc.

Hence, in some preferred embodiments, the multilayered card structure of the present invention comprises at least one overlay clear layer. An overlay clear layer is the top layer on one or both of the outer layers of a multilayered card structure. It provides for the haptic properties of the multilayered card structure and also significantly (but not necessarily totally) contributes to the optical appearance of the multilayered card structure. Preferably, the multilayered card structure comprises overlay clear layers on both outer surfaces, i.e. on the top layer and on the bottom layer.

In some further preferred embodiments, the multilayered card structure of the present invention comprises at least one core layer. The core layer which can be considered as a base layer of the multilayered card structure mainly provides for the overall stiffness and robustness of the card structure. The core layer may be one discrete layer but need not necessarily be only one discrete layer. Rather, the core layer can also comprise at least two, at least three, or even at least four layers. Albeit in principle a lower number of individual core layers, such as only one individual core layer, is preferable for production efficiency and costs reasons, in some instances more than one individual layer is preferred. For instance, if one core layer contains an antenna, it is preferable, if the antenna-containing core layer is covered by at least one, preferably two core stock layers on each side of the antenna-containing core layer. Such structural setup provides for instance particular stability of the multilayered card structure and/or ensures that the antenna is well-protected and not exposed to the environment.

In some further embodiments, the multilayered card structure of the present invention comprises an antenna layer. The antenna in the antenna layer is usually a metal wire made from a conductive metal, such as instance from copper or iron, and preferably from iron. The antenna in the antenna layer is completely embedded in a polymer matrix. The antenna layer is preferably covered by at least one, preferably two core stock layers on each side of the antenna-containing core layer.

The multilayered card structure of the present invention may further comprise typical components and/or inserts of multilayered card structures for security elements, such as preferably banking cards. Such typical components and/or inserts may be magnetic strips, chips, holograms, etc.

In some further embodiments, the multilayered card structure of the present invention comprises a magnetic strip. A magnetic strip is made from a magnetic material and may be used to save data on the card which can for instance be read by a card-reading machine.

In some further embodiments, the multilayered card structure of the present invention comprises a chip. A chip may also be used to save data on the card which can for instance be read by a card-reading machine.

In a further preferred embodiment, the multilayered card structure of the present invention is a security document, preferably a banking card.

Fig. 1 schematically shows an exemplified multilayered card structure according to the present invention. Such exemplified multilayered card structure has overlay clear layers 1 and 11 on the top and the bottom and further comprises clear layers 2 and 10. Between the overlay clear layer and the clear layer there may be an adhesive layer (not shown in Fig. 1). The multilayered card structure further comprises core layers 4, 5, and 6, of which layers 4 and 6 are core stock layers and layer 5 is an antenna layer. Between clear layer 2 and core stock layer 4 is an adhesive layer 3 to improve adhesion between said two layers. The multilayered card structure further comprises an aluminum-containing layer 8 covered by a first polymer-based layer which is a poly(ethylene terephthalate) (PET) layer 9. Between core stock layer and 6 and aluminum-containing layer 8 is an adhesive layer 7 to improve adhesion between said two layers. It should be understood that the relative thicknesses as indicated in Fig. 3 are exemplarily only. The skilled person may easily adapt the thickness of any of the layers of the multilayered card structure according to needs. The multilayered card structure may also contain additional components and/or inserts such as magnetic strips, chips, holograms, etc. (not shown in Fig. 1)

## Claims

1. A multilayered card structure comprising at least one aluminum-containing layer covered by a first polymer-based layer which is a poly(ethylene terephthalate) (PET) layer, wherein all further polymer-based layers of the multilayered card structure except of potentially present adhesive layers comprise glycol-modified PET (PET-G) or PET.

2. The multilayered card structure of claim 1 which further comprises an antenna layer.

3. The multilayered card structure of claim 1 or 2 which further comprises overlay clear layers on both outer surfaces.

4. The multilayered card structure of any of claims 1-3, which further comprises a magnetic strip.

5. The multilayered card structure of any of claims 1-4, which further comprises a chip.

6. The multilayered card structure of any of claims 1-5, which comprises at least one layer comprising PET-G.

7. The multilayered card structure of any of claims 1-6, wherein all further polymer-based layers of the multilayered card structure comprise PET-G.

8. The multilayered card structure of any of claims 1-7, which comprises at least one layer which comprises recycled PET-G or recycled PET.

9. The multilayered card structure of any of claims 1-8, wherein all layers except of the PET layer on the aluminum-containing layer and potentially present adhesive layers comprise recycled PET-G or PET.

10. The multilayered card structure of any of claims 1-9, which is a security document, preferably a banking card.
